# FASCICULE DE BREVET EUROPEEN

(11) **EP 3 262 392 B1**
(45) Date de publication et mention de la délivrance du brevet: **14.10.2020**
(21) Numéro de dépôt: 16713523.5
(22) Date de dépôt: 22.02.2016
(51) Int. Cl.: G01M 11/08, B64F 5/60, G01M 15/14, G02B 23/24

(54) **PROCEDE ET DISPOSITIF DE CONTROLE DE L'ETAT D'UN MOTEUR D'AERONEF A DISTANCE**
VERFAHREN UND VORRICHTUNG ZUR FERNINSPEKTION DES ZUSTANDS EINES FLUGZEUGMOTORS
METHOD AND DEVICE FOR REMOTELY INSPECTING THE STATE OF AN AIRCRAFT ENGINE

(30) Priorité: 23.02.2015 FR 1551523
(43) Date de publication de la demande: 03.01.2018
(73) Titulaire: SAFRAN AIRCRAFT ENGINES, 75015 Paris (FR)
(72) Inventeur: REMOND, Florie, 77550 Moissy Cramayel (FR); GUERIN, Erwan, 77550 Moissy Cramayel (FR); GUYENNE, Jade, 77550 Moissy Cramayel (FR); LHERMENIER, Bernard, 77550 Moissy Cramayel (FR); SQUEDIN, Sylvain, 77550 Moissy Cramayel (FR)
(74) Mandataire: Brevalex
(86) Numéro de dépôt international: PCT/FR2016/050401
(87) Numéro de publication internationale: WO 2016/135402

(56) Documents cités:
- EP-A2- 0 725 373
- WO-A1-01/71500
- JP-A- 2004 024 340
- US-A1- 2008 109 187
- US-A1- 2014 208 163

## Description

### DOMAINE TECHNIQUE

L'invention se situe dans le domaine du contrôle des moteurs d'aéronefs en cours de développement ou en cours de maintenance après un atterrissage suite à un vol, ou en maintenance programmée, et concerne plus spécifiquement un dispositif et un procédé d'aide au diagnostic à distance au cours d'une vérification de l'état d'un moteur d'aéronef réalisée in situ par un opérateur au moyen d'un endoscope ou d'une caméra utilisé(e) pour capter des images dudit moteur et pour effectuer des mesures destinées à être transmises, avec une documentation et des images de référence, à au moins un terminal distant utilisé par au moins un expert distant en vue de procéder à une analyse collaborative desdites images et desdites mesures, le dispositif comporte en outre un boîtier portatif connectable à un écran et muni de moyens pour communiquer sans fil avec l'endoscope et de moyens permettant à l'opérateur d'enrichir manuellement et/ou automatiquement les images captées et les mesures effectuées avec des commentaires audio et/ou vidéo et/ou textuels.

L'invention concerne également un procédé d'aide au diagnostic à distance au cours d'une endoscopie d'un moteur d'aéronef.

L'invention concerne en outre un programme d'ordinateur mémorisé sur un support d'enregistrement et comportant des instructions pour réaliser les étapes du procédé.

### ETAT DE LA TECHNIQUE ANTÉRIEURE

Lors de la vérification de l'état d'un moteur d'aéronef après un atterrissage suite à un vol, en maintenance programmée ou lors des essais en cours de développement d'ensemble propulsif ou de composants de moteurs d'aéronefs, les pièces du moteurs sont vérifiées et testées in situ par des opérateurs situés au pied de l'aile de l'aéronef ou dans des installations de développement, d'essai ou de maintenance. Ces moteurs peuvent parfois être expertisés par des experts techniques qui ne sont pas toujours localisés sur le lieu des contrôles et des essais et doivent se déplacer pour voir l'état des composants et fournir des avis et conseils techniques aux opérateurs. Les experts sont notamment amenés à analyser des défauts constatés au cours d'endoscopies et doivent pour cela disposer d'informations permettant de déterminer la nature même du défaut ou de l'endommagement. Il est donc nécessaire, pour l'expert, de pouvoir communiquer avec l'opérateur de l'endoscopie afin de recueillir toutes les données nécessaires à son analyse afin d'établir un diagnostic fiable et de prodiguer des recommandations pertinentes sur les actions à mener pour traiter ce problème.

Les documents US2014/0208163 et WO01/71500 décrivent des dispositifs d'aide au diagnostic de l'état d'un moteur d'aéronef en utilisant un endoscope.

En outre, les décisions doivent être prises rapidement et sans ambigüité afin de statuer sur des niveaux d'endommagement et permettre un retour rapide en opération de l'aéronef, ou de compléter la campagne d'essai.

Actuellement les décisions techniques impliquant de multiples sites et personnes distants sont réalisées via de nombreux échanges téléphoniques ou de mails pouvant inclure des photos ou des vidéos.

Cette procédure implique des itérations répétées lorsqu'il y a une incompréhension entre les opérateurs qui réalisent les essais ou les expertises et les experts qui analysent les résultats de ces essais ou expertises. Ceci oblige les opérateurs à effectuer un très grand nombre de prises de vues pour éviter de manquer une zone critique du moteur contrôlé. Or dans le domaine de l'aviation, pour des raisons impératives de sécurité, le partage d'une information technique doit se faire sans ambigüité. A cet effet, les experts distants doivent disposer de mesures, d'images, de vidéos réalisées selon des angles de prises de vues spécifiques.

Les opérateurs au pied de l'installation doivent par conséquent pouvoir se déplacer facilement pour accéder sans difficulté aux différentes zones à contrôler. Ceci n'est pas toujours possible avec les appareils actuels en raison de l'encombrement dû à l'utilisation de plusieurs outils reliés par plusieurs câbles qui constituent une gêne pour les opérateurs au pied des appareils à tester, et au fait que les deux mains des opérateurs souvent prises dans l'espace, très confiné, dans lequel ils opèrent lorsqu'ils sont sous l'aile (quelques dizaines de centimètres de recul seulement).

En outre, si les conditions de communications ne sont pas optimales (présence de perturbations, absence de couverture réseau, perturbations électromagnétiques), les images et les mesures effectuées peuvent être de qualité insuffisante pour permettre aux experts distants d'établir un diagnostic fiable.

Un but de l'invention est de permettre aux opérateurs qui effectuent les mesures d'accéder sans contraintes à toutes les zones du moteur à contrôler et de pouvoir se mouvoir tout en réalisant l'inspection, les mesures, et leur partage en temps réel avec les experts distants.

Un autre but de l'invention est de fournir aux experts des informations précises, notamment, des mesures effectuées et des images prises dans des zones clés pour établir un diagnostic quelles que soient les conditions météorologiques et quelles que soient la topologie du lieu où sont effectués les essais.

### EXPOSÉ DE L'INVENTION

Ce but est atteint au moyen d'un dispositif selon la revendication 1, ledit dispositif étant compact, peu encombrant adapté à tous les types de matériels endoscopiques et caméras analogiques, et à tous les contextes d'endoscopies ou de vidéos d'ensemble propulsifs ou de composants (sous l'aile, déposé, etc.) de manière à permettre aux opérateurs localisés sur le site de contrôle et d'essais d'atteindre, sans contraintes, les différentes zones de l'ensemble propulsif sous test afin d'identifier et de visualiser rapidement d'éventuels défauts et de communiquer en temps réel les images captées et les résultats des mesures.

Ce dispositif comporte au moins un endoscope muni d'une caméra utilisé in situ par au moins un opérateur pour capter des images dudit moteur et effectuer des mesures destinées à être transmises à au moins un terminal distant utilisé par au moins un expert distant en vue d'effectuer une analyse collaborative desdites images et desdites mesures.

Le dispositif selon l'invention comporte en outre un boîtier portatif contrôlé par l'opérateur localisé sur le site de contrôle et d'essais munie de moyens pour communiquer sans fil avec l'endoscope et de moyens permettant audit opérateur d'enrichir manuellement ou automatiquement les images captées et les mesures effectuées avec des commentaires audio et/ou vidéo et/ou textuels.

Ledit boîtier portatif comporte en outre un module logiciel destiné à générer un contexte opératoire en fonction de données de localisation fournies par un GPS, de données météo du lieu de l'endoscopie et de données sur le réseau de communications ainsi que des données de description du déroulement de l'endoscopie. Parmi les données de météo, on peut citer les informations de température, pression, humidité de l'air, caractérisant le contexte atmosphérique de l'endoscopie. Les données de description du déroulement de l'endoscopie peuvent être des journaux d'événements générés automatiquement par exemple par l'endoscope, ou par le boitier portatif et mentionnant des anomalies dans le déroulement de l'endoscopie comme une erreur provenant d'un module de mesure.

Grâce aux commentaires audio et/ou vidéo et/ou textuels ajoutés, les experts distants peuvent guider l'opérateur localisé sur le site de contrôle et d'essais au cours des tests. Les experts peuvent aider à la prise de décisions et envisager des actions correctives dans des délais très courts.

Ledit boîtier portatif comporte en outre une interface de communication sans fil permettant aux opérateurs localisés sur le site de contrôle et d'essais d'échanger avec l'expert, en temps réel et de façon interactive, les images captées, de la documentation et les résultats des mesures effectuées enrichis par les commentaires audio et/ou vidéo et/ou textuels.

Ainsi, lorsque les experts distants reçoivent les coordonnées de la tête de l'endoscope en lien avec une éventuelle anomalie, après examen de l'éventuelle anomalie sur les images transmises par l'opérateur, ils peuvent renvoyer des instructions à l'opérateur pour le guider à effectuer des mesures et/ou des prises de vues sur d'autres pièces et à d'autres positions sur le moteur.

Dans un mode préféré de réalisation de l'invention, le boîtier portatif comporte un encodeur permettant d'ajuster le débit des informations échangées avec le terminal distant en fonction des caractéristiques du réseau afin de conserver une qualité d'images maximale et une latence minimale. Notons que le boîtier portatif est configurable pour transmettre au terminal distant des informations réduites en cas de perturbations du réseau de communication. Lesdites informations réduites comportent des coordonnées de la tête de l'endoscope, une image par seconde ou une seule image pertinente représentative d'une anomalie et pour transmettre au moins une image au terminal distant sur détection automatique d'un motif particulier susceptible de représenter une anomalie.

Afin d'aider les experts distants à rechercher une anomalie dans le moteur, le terminal distant comporte une représentation virtuelle dudit moteur en trois dimensions (3D) permettant de localiser une anomalie au moyen des coordonnées de la tête de l'endoscope, et un module logiciel de recherche de défaut configuré pour comparer une image captée par l'endoscope à au moins un modèle ou un motif d'anomalies préalablement mémorisés dans une première base de données.

Ladite représentation virtuelle est une maquette virtuelle en trois dimensions (3D) dudit moteur.

Le terminal distant reçoit les coordonnées de la tête de l'endoscope correspondant à une éventuelle anomalie, ces coordonnées sont exploitées par le module logiciel de recherche de défaut qui repère la position indiquée sur la maquette 3D. L'expert distant peut alors examiner l'éventuelle anomalie sur les images transmises par l'opérateur et éventuellement renvoyer des instructions à l'opérateur pour le guider à effectuer d'autres mesures et/ou prises de vues.

Notons que le module logiciel de recherche de défaut peut également être implémenté dans un serveur distant comportant une base de données et des modèles d'analyse statistique.

Le boîtier comporte en outre une connectique pour être relié à un casque audio, une tablette et/ou à un ordinateur portable et une mémoire pour enregistrer les informations et les images captées et les mesures échangées, et un module de conversion des images captées d'un format de données spécifique à l'endoscope vers un format de données exploitable par le terminal distant.

Le procédé d'aide au diagnostic à distance selon l'invention comporte les étapes suivantes :
- transmettre lesdites images et lesdites mesures de l'endoscope à un boîtier portatif connectable à un écran et contrôlé par l'opérateur;
- enrichir manuellement et/ou automatiquement lesdites images et lesdites mesures avec des commentaires audio et/ou vidéo et/ou textuels,
- échanger en temps réel et de façon interactive, via une connexion sans fil, les images, les mesures, une documentation et des images de référence enrichies entre ledit boîtier portatif et au moins un terminal distant utilisé par l'expert pour analyser lesdites images et lesdites mesures et pour établir un diagnostic de façon collaborative.

Ce procédé comporte en outre une étape préalable consistant à générer un contexte opératoire en fonction de données de localisation fournies par un GPS, de données météo du lieu de l'endoscopie et de donnée sur le réseau de communication de manière à déterminer les paramètres idéaux d'encodage pour la publication des images et des mesures.

Le procédé comporte en outre un test de connectivité et un calcul de bande passante pour vérifier si le réseau permet une communication fiable entre le boîtier portatif et le terminal distant, et une étape consistant à ajuster le débit des informations échangées entre le boîtier portatif et le terminal distant en fonction des caractéristiques du réseau afin de conserver une qualité d'images maximale et une latence minimale.

Dans une variante de mise en œuvre, le procédé selon l'invention comporte en outre une étape consistant à transmettre au terminal distant des informations réduites en cas de perturbations du réseau de communication.

Le procédé selon l'invention est mis en œuvre au moyen d'un programme d'ordinateur mémorisé sur un support d'enregistrement et comportant des instructions pour réaliser les étapes dudit procédé lorsqu'il est exécuté sur une tablette ou un ordinateur.

### BRÈVE DESCRIPTION DES DESSINS

D'autres caractéristiques et avantages de l'invention ressortiront de la description qui va suivre, prise à titre d'exemple non limitatif, en référence aux figures annexées dans lesquelles:
- La figure 1 représente schématiquement un dispositif selon l'invention,
- la figure 2 représente schématiquement les étapes d'un procédé selon l'invention.

### EXPOSÉ DÉTAILLÉ DE MODES DE RÉALISATION PARTICULIERS

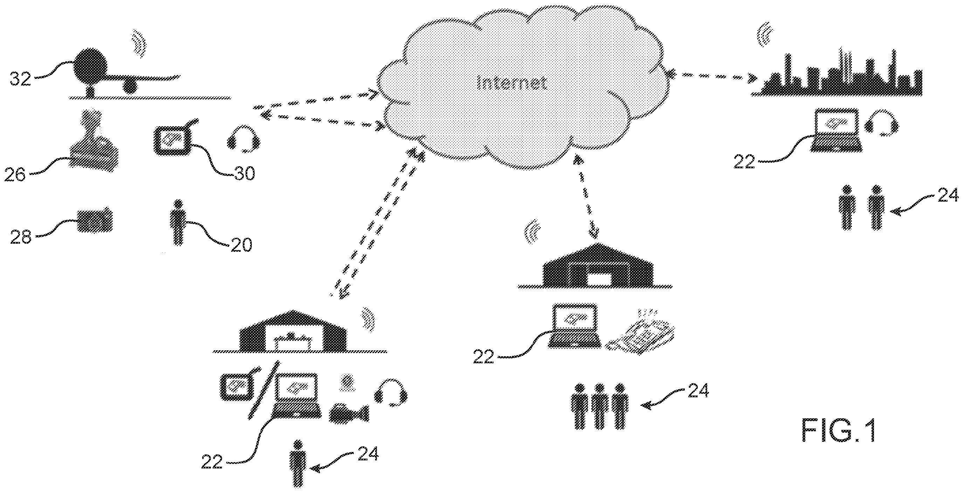

La figure 1 représente schématiquement un dispositif d'aide au diagnostic à distance au cours d'une vérification de l'état d'un moteur d'aéronef, une endoscopie par exemple, réalisée in situ par des opérateurs 20 au pied de l'aile de l'aéronef ou dans des installations de développement, d'essai ou de maintenance pour capter des images notamment à l'intérieur du moteur de l'aéronef et pour capter des mesures destinées à être transmises à plusieurs terminaux distants 22 utilisés par plusieurs experts 24 en vue d'effectuer une analyse collaborative desdites images et desdites mesures. Les images et les mesures sont réalisées au moyen d'un endoscope 26 ou une caméra 28 qui communiquent via une liaison sans fil avec un boîtier portatif 30.

Dans un mode de réalisation préféré, une tablette est associée physiquement au boîtier portatif de manière à former un ensemble compact.

Dans la suite de cette description, le boîtier portatif 30 désignera cet ensemble compact.

Dans un mode de réalisation alternatif, le boitier portatif est indépendant de la tablette ou l'ordinateur portable ou de tout autre moyen d'interface homme machine avec lesquels il communique, via une liaison sans fil, par exemple.

Dans le mode de réalisation préféré, le contexte opératoire de l'endoscopie est généré par un module logiciel intégré au boîtier portatif 30 en fonction de données de localisation fournies par un GPS, de données météo du lieu de l'endoscopie et de données sur le réseau de communications. Ainsi, au début de la publication des images et des mesures et tout au long de l'endoscopie ce module logiciel extrait du contexte via plusieurs sources d'information:
- GPS ou autre système de localisation ;
- Des données météo en relation avec la localisation de l'endoscopie via des APIs (*Application Programming Interface*) par exemple ;
- Des informations temporelles (timestamp) relatives à la publication des mesures effectuées et des images captées ;
- Des données sur le lieu de l'endoscopie, des données aéroport (ex : altitude, etc.) ;
- Des données réseau : type de réseau, débit, la gigue, latence, etc.

Les informations sont enregistrées pour une restitution dans un rapport final de l'endoscopie.

Selon l'invention, la connaissance du contexte opératoire permet, à tout moment, de déterminer les paramètres idéaux d'encodage pour la publication des images et des mesures.

Le boîtier 30 comporte en outre un logiciel permettant aux opérateurs 20 d'enrichir les images captées et les mesures effectuées avec des commentaires audio et/ou vidéo et/ou textuels. Ces commentaires peuvent être saisis manuellement au moyen d'un clavier virtuel ou d'une commande vocale et/ou automatiquement à partir d'un lecteur NFC (Near Field Communication) ou d'une centrale inertielle associés à l'endoscope 26. Ces commentaires peuvent comporter des informations sur le déroulement de l'endoscopie. En outre, le boîtier 30 est équipé d'une interface de communication sans fil qui assure une connexion au réseau Internet via une antenne 32 agencée sur le site des installations. Le boîtier 30 comporte en outre un module de test de connectivité et un module de calcul de bande passante destinés, respectivement, à vérifier si le réseau permet une communication fiable entre les opérateurs 20 et les experts 24, et à estimer le débit binaire maximal possible entre le boîtier 30 et les terminaux distants 22.

Afin de conserver une qualité d'images maximale et une latence minimale, le boîtier 30 comporte aussi un encodeur permettant d'ajuster le débit et les informations transmises en fonction des caractéristiques du réseau et de paramètres d'encodage déterminés par une carte d'acquisition intégrée dans le boîtier 30. Les paramètres d'encodage sont par exemple la résolution (ex : 1024x768), le nombre de trames par seconde (ex : 24fps) et le type d'encodeur (ex : H264, VP8). Ces paramètres sont utilisés par l'encodeur pour ajuster l'encodage des images vidéo en fonction du réseau sélectionné. Ainsi, lorsque la bande passante du réseau n'est pas suffisante pour faire passer le flux vidéo, l'encodeur peut transmettre des informations réduites comme des coordonnées de la tête de l'endoscope, et une image par seconde, ou encore une image sélectionnée par l'opérateur, ainsi que les mesures réalisées. Le terminal distant sur lequel opère l'expert peut comporter une maquette virtuelle en trois dimensions du moteur. Avec des informations de positionnement de la pièce dans le moteur, de la tête de l'endoscope, un angle de la prise de vue et une image, l'expert peut localiser et visualiser la pièce visée dans le moteur et ainsi demander à l'opérateur d'autres prises de vue pour analyser un défaut.

Dans un autre mode de réalisation, une image peut être transmise à l'expert sur détection automatique d'un motif particulier révélateur d'un endommagement.

L'opérateur et les experts distants échangent de façon interactive les images captées, les résultats des mesures effectuées dans le contexte opératoire de l'endoscopie, une documentation et des images de référence enrichis par les commentaires audio et/ou vidéo et/ou textuels, ainsi que des informations sur la position de la caméra et des sondes de mesures. Les experts distants analysent les informations reçues et, si cela est nécessaire, guident l'opérateur à localiser avec précision les points de mesures et de prises de vue.

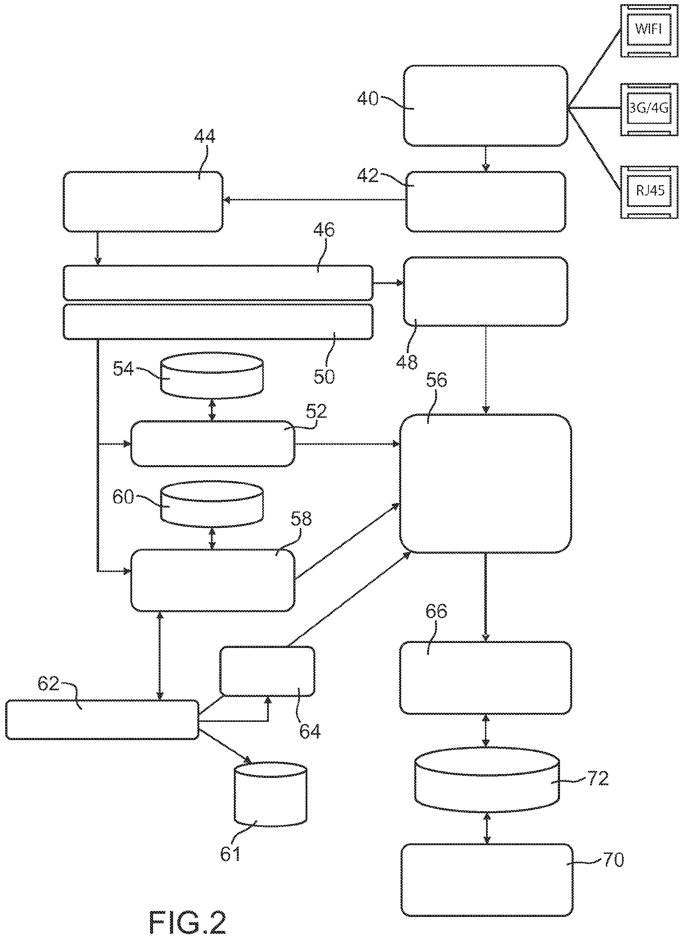

La figure 2 illustre les étapes d'une session de test et d'analyse collaborative réalisée au moyen du dispositif de l'invention.

Avant d'effectuer l'endoscopie, à l'étape 40, l'opérateur 20 lance un test de connectivité et de recherche de réseaux disponibles. Au cours de cette étape, le module de test de connectivité calcule la bande passante et sélectionne, à l'étape 42, le débit le plus approprié pour effectuer des échanges fiables entre le boîtier 30 et les terminaux distants 22.

A l'étape 44, l'opérateur 20 effectue des mesures et des captures d'image vidéo sur les zones du moteur à tester.

A l'étape 46, l'encodeur encapsule les paquets vidéo dans un protocole de transport (ex : RTP, RTMP) pour publier le flux vidéo via le réseau internet vers un serveur de partage de vidéo ou d'images et/ou son, auquel les experts distants 24 peuvent se connecter, via une liaison WIFI par exemple, pour récupérer les informations publiées. Les experts peuvent également recevoir ces informations directement sur leurs terminaux respectifs.

Notons que dès le début de la publication des mesures et du flux vidéo et tout au long de l'endoscopie le générateur de contexte extrait les informations décrivant le contexte de l'endoscopie (étape 48). Celles-ci sont ensuite enregistrées pour une restitution ultérieure dans le rapport final de l'endoscopie. Les données de contexte permettent aux experts distants 24 de faire une analyse fine des phénomènes détectés lors de l'endoscopie et ainsi d'établir un diagnostic précis sur les causes d'un endommagement.

Le système de capture vidéo de l'endoscope extrait (étape 50) une image sur vingt-quatre par chaque seconde (24fps). Cette image est traitée par un module logiciel de recherche de défaut installé dans le boîtier 30 et dédié, à la fois, à la détection d'anomalies ou à la reconnaissance de QR code ou tout autre système de marquage des pièces du moteur. Le module logiciel de recherche de défaut enregistre dans la mémoire du boîtier 30 des informations temporelles (timestamp) relatives à la publication des mesures effectuées et des images captées. Dans un mode de réalisation alternatif, le traitement d'image peut être réalisé par un serveur distant.

A l'étape 52, l'image extraite ou une partie de cette image est comparée par le module logiciel de recherche de défaut à des modèles ou à des motifs d'anomalies préalablement mémorisés dans une première base de données 54. Celle-ci peut être enregistrée dans un serveur distant accessible par les experts distants 24. Si une anomalie est détectée ou si un seuil d'incertitude est atteint, le module de recherche de défaut génère des notifications qui s'affichent sur l'écran de la tablette associée au boîtier 30 et sur les écrans des terminaux distants 22. L'opérateur 20 enrichit ces notifications de commentaires audio et/ou vidéo qui sont transmis en temps réel (étape 56) aux experts distants 24. D'autres informations sont ajoutées automatiquement aux images captées à partir d'un lecteur NFC (Near Field Communication) et/ou d'une centrale inertielle associés à l'endoscope 26. Les informations recueillies par le lecteur NFC sont des données caractérisant la pièce du moteur porteur d'une puce NFC. Par exemple ceci permet d'identifier une pièce et de la positionner sur la maquette virtuelle en trois dimensions représentative du moteur. Le positionnement de la pièce sur la maquette virtuelle permet aux experts de guider de façon interactive l'opérateur 20 en lui indiquant avec précision les zones à examiner. D'autres informations comme la date de début de mise en service de la pièce, ses caractéristiques et provenance peuvent permettre aux experts d'effectuer leur analyse de l'endoscopie.

A l'étape 58, le module de recherche de défaut lit le QR code ou tout autre système de marquage visuel de la pièce, consulte une deuxième base de donnée 60 comprenant des informations relatives à toutes les pièces du moteur et à leurs localisations et fonctions respectives dans l'ensemble propulsif.

Préférentiellement, la localisation de la pièce dans l'ensemble propulsif utilise trois sources potentielles d'informations:
- Central inertielle, embarquée sur la camera endoscopique, qui fournit des informations de déplacement et qui utilise les informations des plans du moteur mémorisées dans une troisième base de données 61 pour estimer la position de la camera. Ces informations sont ajoutées automatiquement aux images capturées.
- L'information de localisation fournie à l'étape 58 à partir de la reconnaissance de tags visuels comme un QR code ;
- L'information obtenue par lecture de tag NFC (ou similaire) au moyen d'un lecteur monté sur la tête de la camera.

A l'étape 62, les données de localisation, de détection/reconnaissance de pièces ou d'anomalies obtenues aux étapes précédentes sont ajoutées automatiquement et en temps réel au flux vidéo pour la transmission aux experts 24. Ces données sont ensuite affichées à l'étape 64.

Les données de localisation permettent de texturer la maquette en trois dimensions avec les images transmises par le flux vidéo. Il s'agit alors de faire correspondre les informations de localisation avec la maquette en trois dimensions en effectuant des recalages de position si nécessaire. Par exemple si les informations de positions sont biaisées, la maquette en trois dimensions peut permettre de les corriger en effectuant une interpolation de la position courante de la tête de l'endoscope en fonction des localisations précédentes de la tête de l'endoscope et une projection de la position courante sur la maquette en trois dimensions. Des données de recalage peuvent dans un mode de réalisation alternatif être transmises à la centrale inertielle pour correction de ses données de positionnement.

Avantageusement, l'association du flux d'image et de la maquette en trois dimensions permet une immersion de l'expert dans le contexte de l'endoscopie.

A l'étape 66, les données produites pendant la session sont agrégées sur une ligne de temps, permettant ainsi de rejouer la vidéo, de retrouver la documentation ou les images de référence avec toutes les données de l'observation endoscopique.

Si les experts estiment que les informations reçues en temps réel sont suffisantes pour établir un diagnostic, ils transmettent en direct leur diagnostic à l'opérateur 20 oralement ou via une messagerie électronique. A la fin de l'inspection, la session partagée est interrompue et les données (mesures photos vidéo, conversations ...) échangées au cours de la session sont stockées (étape 70) dans une mémoire 72.

Le dispositif selon l'invention offre une solution matérielle et logicielle qui s'appuie sur des interfaces standardisées et s'adapte à tous les types de matériels endoscopiques et de caméras (et non à une seule marque et un seul modèle) et à tous les contextes d'endoscopies ou de vidéos d'ensemble propulsifs ou de composants.

## Revendications

1. Dispositif d'aide au diagnostic à distance au cours d'une vérification de l'état d'un moteur d'aéronef réalisée in situ par au moins un opérateur (20) au moyen d'un endoscope (26) ou d'une caméra, utilisés pour capter des images dudit moteur et des mesures destinées à être transmises à au moins un terminal distant (22) utilisé par au moins un expert distant (24) en vue d'effectuer une analyse collaborative desdites images et desdites mesures, ce dispositif comporte en outre un boîtier portatif (30) connectable à un écran et contrôlé par l'opérateur (20), ledit boîtier portatif (30) étant muni de moyens pour communiquer sans fil avec l'endoscope (26) et de moyens permettant à l'opérateur (20) d'enrichir manuellement et/ou automatiquement les images captées et les mesures effectuées avec des commentaires audio et/ou vidéo et/ou textuels, dispositif **caractérisé en ce que** ledit boîtier portatif (30) comporte un module logiciel destiné à générer un contexte opératoire en fonction de données de localisation fournies par un GPS, de données météo du lieu de l'endoscopie et de données sur le réseau de communications de manière à déterminer les paramètres idéaux d'encodage pour la publication des images et des mesures.

2. Dispositif selon la revendication 1 dans lequel ledit boîtier portatif (30) comporte en outre une interface de communication sans fil permettant à l'opérateur (20) d'échanger avec les experts distants (24), en temps réel et de façon interactive, les images captées, les résultats des mesures effectuées, une documentation et des images de référence enrichis par les commentaires audio et/ou vidéo et/ou textuels, et une mémoire (72) pour enregistrer les informations et les images captées et les résultats des mesures échangées entre l'opérateur (20) et les experts distants (24).

3. Dispositif selon l'une des revendications 1 ou 2 dans lequel ledit boîtier portatif (30) comporte en outre un module de test de connectivité et un module de calcul de bande passante destinés à vérifier si le réseau permet une communication fiable avec le terminal distant (22).

4. Dispositif selon la revendication 3 dans lequel ledit boîtier portatif (30) comporte en outre un encodeur permettant d'ajuster le débit des informations échangées avec le terminal distant (22) en fonction des caractéristiques du réseau afin de conserver une qualité d'images maximale et une latence minimale.

5. Dispositif selon la revendication 4 dans lequel, ledit boîtier portatif (30) est en outre configurable pour transmettre au terminal distant (22) des informations réduites en cas de perturbations du réseau de communication.

6. Dispositif selon la revendication 5 dans lequel lesdites informations réduites comportent des coordonnées de la tête de l'endoscope, une image par seconde ou une seule image pertinente représentative d'une anomalie.

7. Dispositif selon l'une des revendications 1 à 6 dans lequel, ledit boîtier portatif (30) est configurable pour transmettre au moins une image au terminal distant (22) sur détection automatique d'un motif particulier susceptible de représenter une anomalie.

8. Dispositif selon la revendication 7 dans lequel le terminal distant (22) comporte une représentation virtuelle du moteur.

9. Dispositif selon la revendication 8 dans lequel ladite représentation virtuelle est une maquette virtuelle du moteur en trois dimensions.

10. Procédé d'aide au diagnostic à distance au cours d'une vérification de l'état d'un moteur d'aéronef en vue d'une analyse collaborative d'images et de mesures réalisées par un opérateur (20) au moyen d'un endoscope (26) ou d'une caméra et destinées à être transmises à au moins un expert distant (24), procédé comportant les étapes suivantes :
- transmettre lesdites images et lesdites mesures de l'endoscope (26) à un boîtier portatif (30) connectable à un écran et contrôlé par l'opérateur (20) ;
- enrichir manuellement et/ou automatiquement lesdites images et lesdites mesures avec des commentaires audio et/ou vidéo et/ou textuels,
- échanger en temps réel et de façon interactive, via une connexion sans fil, les images, les mesures, une documentation et des images de référence enrichies entre ledit boîtier portatif (30) et au moins un terminal distant (22) utilisé par l'expert (24) pour analyser lesdites images et lesdites mesures et pour établir un diagnostic de façon collaborative, **caractérisé en ce qu'**il comporte en outre une étape préalable consistant à:
- générer un contexte opératoire en fonction de données de localisation fournies par un GPS, de données météo du lieu de l'endoscopie et de donnée sur le réseau de communication de manière à déterminer les paramètres idéaux d'encodage pour la publication des images et des mesures.

11. Procédé selon la revendication 10 comportant en outre un test de connectivité et un calcul de bande passante pour vérifier si le réseau permet une communication fiable entre le boîtier portatif (30) et le terminal distant (22).

12. Procédé selon la revendication 11 comportant en outre une étape consistant à ajuster le débit des informations échangées entre le boîtier portatif (30) et le terminal distant (22) en fonction des caractéristiques du réseau afin de conserver une qualité d'images maximale et une latence minimale.

13. Procédé selon la revendication 12 comportant en outre une étape consistant à transmettre au terminal distant (22) des informations réduites en cas de perturbations du réseau de communication.

14. Procédé selon la revendication 13 dans lequel lesdites informations réduites comportent des coordonnées de la tête de l'endoscope (26), une image par seconde ou une seule image pertinente représentative d'une anomalie.

15. Procédé selon la revendication 14 dans lequel ledit boîtier portatif (30) transmet au terminal distant (22) au moins une image sur détection automatique d'un motif particulier susceptible de représenter une anomalie.

16. Programme d'ordinateur mémorisé sur un support d'enregistrement et comportant des instructions pour réaliser les étapes du procédé selon la revendication 10 lorsqu'il est exécuté sur un ou plusieurs ordinateurs ou tablettes.

## Patentansprüche

1. Hilfsvorrichtung zur Ferndiagnose im Laufe einer Überprüfung des Zustandes eines Flugzeugmotors, die durch mindestens eine Bedienungsperson (20) vor Ort mithilfe eines Endoskops (26) oder einer Kamera durchgeführt wird, die zum Empfangen von Bildern des Motors und geplanten Maßnahmen verwendet werden, um an mindestens ein Fernterminal (22) übertragen zu werden, das von mindestens einem entfernten Fachmann (24) zu dem Zweck genutzt wird, eine gemeinsame Analyse der Bilder und der Maßnahmen durchzuführen, wobei diese Vorrichtung weiterhin ein tragbares Gehäuse (30) aufweist, das mit einem Bildschirm verbindbar ist und von der Bedienungsperson (20) gesteuert wird, wobei das tragbare Gehäuse (30) mit Einrichtungen zur drahtlosen Kommunikation mit dem Endoskop (26) sowie mit Einrichtungen ausgestattet ist, die es der Bedienungsperson (20) ermöglichen, die empfangenen Bilder und die durchgeführten Maßnahmen mit Audio- und/oder Video- und/oder Textkommentaren anzureichern, wobei die Vorrichtung **dadurch gekennzeichnet ist, dass** das tragbare Gehäuse (30) ein Logikmodul aufweist, das zur Erzeugung eines betrieblichen Zusammenhangs in Abhängigkeit von durch ein GPS gelieferten Ortungsdaten, von Wetterdaten des Ortes der Endoskopie sowie von Daten über das Kommunikationsnetz vorgesehen ist, um die idealen Verschlüsselungsparameter für die Veröffentlichung der Bilder und der Maßnahmen zu bestimmen.

2. Vorrichtung nach Anspruch 1, in der das tragbare Gehäuse (30) weiterhin eine drahtlose Kommunikationsschnittstelle, die es der Bedienungsperson (20) ermöglicht, die empfangenen Bilder, die Ergebnisse der durchgeführten Maßnahmen, eine Dokumentation sowie mit Audio- und/oder Video- und/oder Textkommentaren angereicherte Bezugsbilder in Echtzeit und interaktiv mit den entfernten Fachleuten (24) auszutauschen, sowie einen Speicher (72) zum Abspeichern der empfangenen Informationen und Bilder sowie der Ergebnisse der zwischen der Bedienungsperson (20) und den entfernten Fachleuten (24) ausgetauschten Maßnahmen aufweist.

3. Vorrichtung nach einem der Ansprüche 1 oder 2, in der das tragbare Gehäuse (30) weiterhin ein Modul zur Konnektivitätsprüfung sowie ein Modul zur Berechnung der Bandbreite aufweist, welche zur Überprüfung, ob das Netz eine sichere Kommunikation mit dem Fernterminal (22) erlaubt, bestimmt sind.

4. Vorrichtung nach Anspruch 3, in der das tragbare Gehäuse (30) weiterhin einen Kodierer aufweist, der es ermöglicht, den Durchfluss der mit dem Fernterminal (22) ausgetauschten Informationen in Abhängigkeit der Netzeigenschaften einzustellen, um eine maximale Bildqualität und eine minimale Latenz aufrechtzuerhalten.

5. Vorrichtung nach Anspruch 4, in der das tragbare Gehäuse (30) weiterhin konfigurierbar ist, um im Falle von Störungen des Kommunikationsnetzes reduzierte Informationen an das Fernterminal (22) zu übertragen.

6. Vorrichtung nach Anspruch 5, in der die reduzierten Informationen Koordinaten des Endoskopkopfes enthalten, wobei ein Bild pro Sekunde oder ein einzelnes zugehöriges Bild eine Anomalie darstellt.

7. Vorrichtung nach einem der Ansprüche 1 bis 6, in der das tragbare Gehäuse (30) konfigurierbar ist, um mindestens ein Bild über automatische Erfassung eines bestimmten Musters, das eventuell eine Anomalie darstellt, an das Fernterminal (22) zu übertragen.

8. Vorrichtung nach Anspruch 7, in der das Fernterminal (22) eine virtuelle Darstellung des Motors umfasst.

9. Vorrichtung nach Anspruch 8, in der die virtuelle Darstellung ein dreidimensionales virtuelles Modell des Motors ist.

10. Hilfsverfahren zur Ferndiagnose im Laufe einer Überprüfung des Zustandes eines Flugzeugmotors zum Zwecke einer gemeinsamen Analyse von Bildern und Maßnahmen, die von einer Bedienungsperson (20) mithilfe eines Endoskops (26) oder einer Kamera durchgeführt werden und zur Übertragung an mindestens einen entfernten Fachmann (24) bestimmt sind, wobei das Verfahren die folgenden Schritte umfasst:
- Übertragen der Bilder und der Maßnahmen des Endoskops (26) an ein tragbares Gehäuse (30), das mit einem Bildschirm verbindbar ist und von einer Bedienungsperson (20) gesteuert wird;
- Anreichern der Bilder und der Maßnahmen manuell und/oder automatisch mit Audio- und/oder Video- und/oder Textkommentaren,
- Austauschen in Echtzeit und auf interaktive Weise, über eine drahtlose Verbindung, der Maßnahmen, einer Dokumentation sowie angereicherter Bezugsbilder zwischen dem tragbaren Gehäuse (30) und mindestens einem Fernterminal (22), das von dem Fachmann (24) zur Analyse der Bilder und der Maßnahmen sowie zur gemeinsamen Erstellung einer Diagnose verwendet wird, **dadurch gekennzeichnet, dass** es weiterhin eine vorhergehenden Schritt umfasst, der darin besteht:
- einen betrieblichen Zusammenhang in Abhängigkeit von durch ein GPS gelieferten Ortungsdaten, von Wetterdaten des Ortes der Endoskopie und von Daten über das Kommunikationsnetz zu erzeugen, um die idealen Verschlüsselungsparameter für die Veröffentlichung der Bilder und der Maßnahmen zu bestimmen.

11. Verfahren nach Anspruch 10, das weiterhin eine Konnektivitätsprüfung sowie eine Berechnung der Bandbreite umfasst, um zu überprüfen, ob das Netz eine sichere Kommunikation zwischen dem tragbaren Gehäuse (30) und dem Fernterminal (22) ermöglicht.

12. Verfahren nach Anspruch 11, weiterhin mit einem Schritt, der darin besteht, den Durchfluss der zwischen dem tragbaren Gehäuse (30) und dem Fernterminal (22) ausgetauschten Informationen in Abhängigkeit der Netzeigenschaften einzustellen, um eine maximale Bildqualität und eine minimale Latenz aufrechtzuerhalten.

13. Verfahren nach Anspruch 12, weiterhin mit einem Schritt, der darin besteht, im Falle von Störungen des Kommunikationsnetzes reduzierte Informationen an das Fernterminal (22) zu übertragen.

14. Verfahren nach Anspruch 13, in dem die reduzierten Informationen Koordinaten des Endoskopkopfes (26) enthalten, wobei ein Bild pro Sekunde oder ein einzelnes zugehöriges Bild eine Anomalie darstellt.

15. Verfahren nach Anspruch 14, in dem das tragbare Gehäuse (30) mindestens ein Bild über automatische Erfassung eines bestimmten Musters überträgt, das eventuell eine Anomalie darstellt.

16. Computerprogramm, das auf einem Aufzeichnungsmedium gespeichert ist und Anweisungen zur Durchführung der Schritte des Verfahrens nach Anspruch 10 umfasst, wenn es auf einem oder mehreren Computern oder Tablets ausgeführt wird.

## Claims

1. Assistance device for a remote diagnostic during verification of the state of an aircraft engine, carried out in situ by at least one operator (20) by means of an endoscope (26) or a camera, used to capture images of said engine and measurements that will be transmitted to at least one remote terminal (22) used by at least one remote expert (24) to make a collaborative analysis of said images and said measurements, the device also comprising a portable housing (30) that can be connected to a monitor and monitored by the operator (20), said portable housing (30) being provided with means of wireless communication with the endoscope (26) and means of allowing the operator (20) to manually and/or automatically enrich the captured images and the measurements made with audio and/or video and/or text comments, device **characterised in that** said portable housing (30) comprises a software module to generate an operations context as a function of positioning data provided by a GPS, weather data at the location of the endoscopy and data on the communications network so as to determine ideal encoding parameters for the publication of images and measurements.

2. Device according to claim 1, in which said portable housing (30) also comprises a wireless communication interface that the operator (20) can use for exchanges of captured images, the results of measurements made, documentation and reference images enriched with audio and/or video and/or text comments, with remote experts (24), in real time and interactively, and a memory (72) to save captured information and images and the results of measurements exchanged between the operator (20) and the remote experts (24).

3. Device according to claim 1 or 2, in which said portable housing (30) also comprises a connectivity test module and a bandwidth calculation model that will check if the network can carry reliable communication with the remote terminal (22).

4. Device according to claim 3, in which said portable housing (30) also comprises an encoder to adjust the rate of information exchanged with the remote terminal (22) as a function of network characteristics so as to maintain a maximum image quality and minimum latency.

5. Device according to claim 4, in which said portable housing can also be configured to transmit reduced information to the remote terminal (22) in the case of disturbances on the communication network.

6. Device according to claim 5, in which said reduced information includes the coordinates of the endoscope head, one image per second or only one relevant image representative of an anomaly.

7. Device according to claims 1 to 6, in which, said portable housing (30) can be configured to send at least one image to the remote terminal (22) following automatic detection of a particular pattern that could represent an anomaly

8. Device according to claim 7, in which the remote terminal (22) comprises a virtual representation of the engine.

9. Device according to claim 8, in which said virtual representation is a virtual three-dimensional mockup of the engine.

10. Method for assistance with the remote diagnostic during a verification of the state of an aircraft engine to make a collaborative analysis of images and measurements made by an operator (20) using an endoscope (26) or a camera and that will be sent to at least one remote expert (24), method including the following steps:
- transmitting said images and said measurements from the endoscope (26) to a portable housing (30) that can be connected to a monitor and checked by the operator (20);
- manually and/or automatically enriching said images and said measurements with audio and/or video and/or text comments,
- exchanging images, measurements, documentation and reference images between said portable housing (30) and said remote terminal (22) used by the expert (24) in real time and interactively through a wireless connection, to analyse said images and said measurements and to collaboratively create a diagnostic, **characterised in that** it also comprises a preliminary step consisting of:
- generating an operations context as a function of positioning data provided by a GPS, weather data at the location of the endoscopy and data on the communications network so as to determine ideal encoding parameters for the publication of images and measurements.

11. Method according to claim 10 also comprising a connectivity test and a bandwidth calculation to check if the network has a reliable communication between the portable housing (30) and the remote terminal (22).

12. Method according to claim 11 also comprising a step to adjust the rate of information exchanged between the portable housing (30) and the remote terminal (22) as a function of network characteristics so as to maintain a maximum image quality and minimum latency.

13. Method according to claim 12 also comprising a step to transmit reduced information to the remote terminal (22) in the case of disturbances on the communication network

14. Method according to claim 13, in which said reduced information includes the coordinates of the endoscope head (26), one image per second or only one relevant image representative of an anomaly

15. Method according to claim 14, in which said portable housing (30) sends at least one image to the remote terminal (22) following automatic detection of a particular pattern that could represent an anomaly.

16. Computer program memorised on a recording medium and comprising instructions for performing steps in the method according to claim 10 when it is executed on one or several computers or tablets.
